Europäisches Patentamt

(19) European Patent Office

Office européen des brevets

(11) Publication number: **0 236 182 B1**

(12) **EUROPEAN PATENT SPECIFICATION**

(45) Date of publication of patent specification:
27.11.91 Bulletin 91/48

(51) Int. Cl.⁵: **G05B 19/42**

(21) Application number: 87400199.3

(22) Date of filing: 29.01.87

(54) Lens grinding method and apparatus.

(30) Priority: 30.01.86 JP 16740/86

(43) Date of publication of application:
09.09.87 Bulletin 87/37

(45) Publication of the grant of the patent:
27.11.91 Bulletin 91/48

(84) Designated Contracting States:
DE FR GB IT NL

(56) References cited:
EP-A- 0 092 364
GB-A- 1 403 348
GB-A- 2 140 719
US-A- 4 203 259

(73) Proprietor: Kabushiki Kaisha TOPCON
75-1, Hasunuma-cho Itabashi-ku
Tokyo (JP)

(72) Inventor: Isokawa, Nobuhiro
c/o 75-1, Hasunuma-cho
Itabashi-ku Tokyo (JP)
Inventor: Suzuki, Yasuo
c/o 75-1, Hasunuma-cho
Itabashi-ku Tokyo (JP)

(74) Representative: Mongrédien, André et al
c/o SOCIETE DE PROTECTION DES
INVENTIONS 25, rue de Ponthieu
F-75008 Paris (FR)

## Description

## BACKGROUND OF THE INVENTION

This invention relates to a lens edging, bevelling or grinding method for grinding a material lens copying a spectacle frame configuration and an apparatus thereof or the so-called lens edging or bevelling machine. More specifically, it relates to a V-edging or-bevelling method of a lens and an apparatus for carrying out the method.

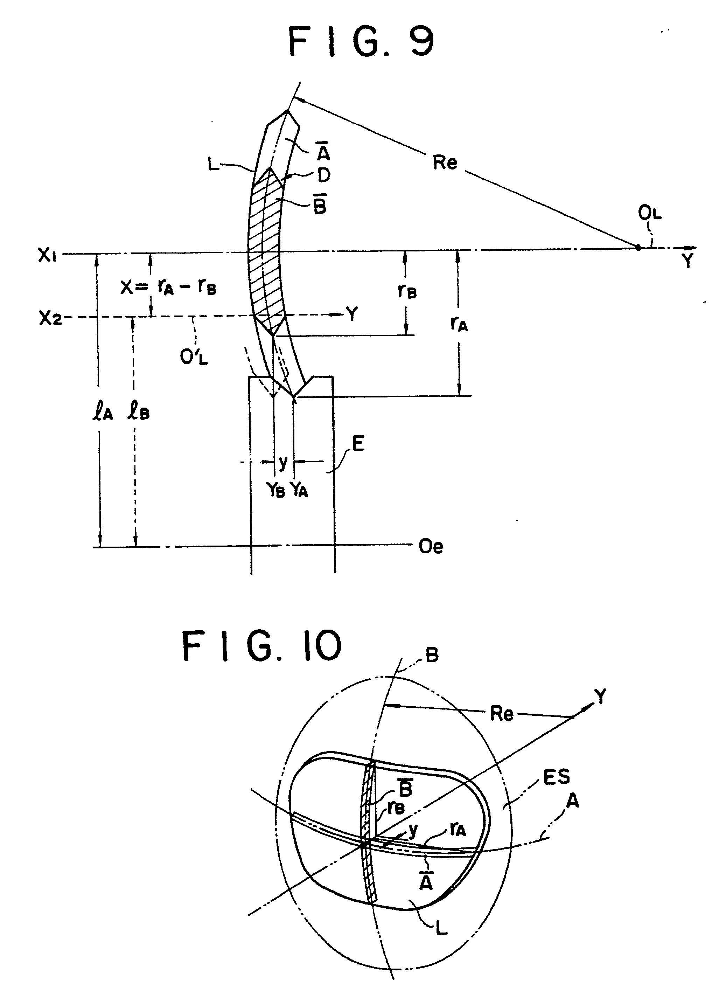

In general, in order to fit a spectacle lens into a lens frame of a spectacle frame, the peripheral portion of the spectacle lens is required to be subjected to V-edge or-bevel treatment. Figs. 9 and 10 schematically illustrate the principle when the V-edge or-bevel treatment is applied to a material lens. In figs. 9 and 10, when an acute V-edge or-bevel treatment with a radius of curvature Re is applied to the peripheral portion of a material lens L, the intershaft distance between a lens rotary axis $O_L$ and a V edge or bevel grinder E becomes $\ell_A$ and a lateral movement position of the lens L becomes $Y_A$ on a meridian $\overline{A}$ having a radius vector $\gamma_A$.

In the material lens L, when the V-edge or bevel D is also put on a position corresponding to the meridian $\overline{B}$, a conventional lens edging or bevelling machine is constituted as such that the intershaft distance $\ell_B$ is changed by $\ell_B = \ell_A - x = \ell_A - (\gamma_A - \gamma_B)$ and the lateral movement position of the lens L is brought to $Y_B$ by moving it for y.

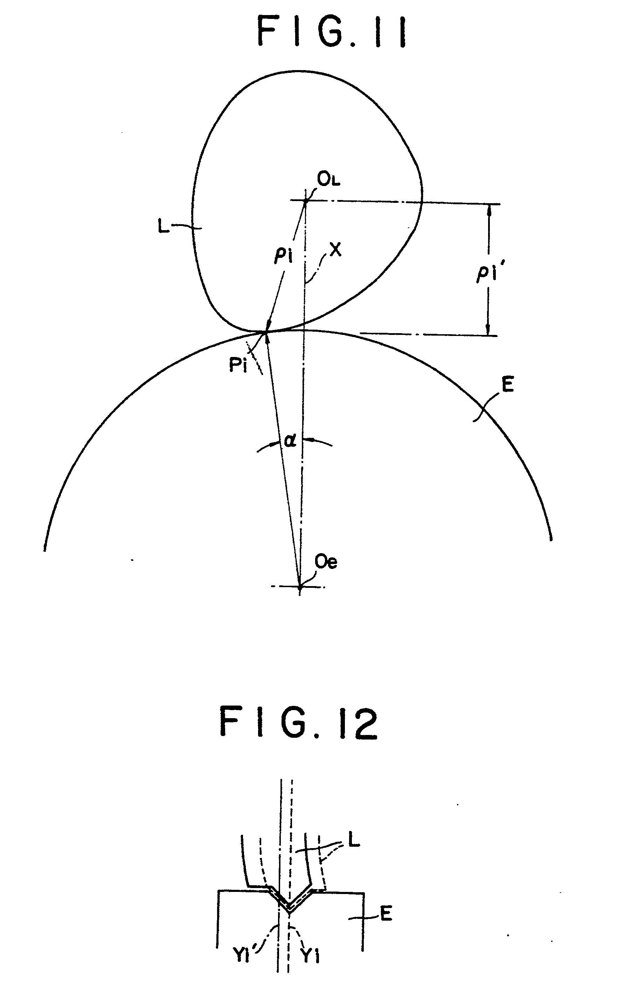

By the way, in the above-mentioned V-edge or-bevel treatment, the conditions for treating the V-edge or bevel having the radius of curvature Re all over the meridians of the material lens L, are limited only to the case where the material lens L and the grinder E, as shown in Fig. 11, contact each other on a straight line X connecting respectively the axial lines $O_L$ and $O_e$, i.e., where the material lens L is ground into a round shape.

However, since the material lens L is three dimensionally curved, when a commonly-used noncircular material lens L is employed, if contacts the V edge and bevel grinder E on a line where the radius vector $\rho_l$ of the material lens L is displaced by angle from the straight line X, and this place becomes the grinding point P as shown for example in Fig. 11. Moreover, when the meridian $\rho_l$, ($\rho_l' < \rho_l$) is displaced from the axial line X as shown in Fig. 11, the center of the treating edge portion of the material lens L and the center of the V edge or bevel grinder E are slightly displaced in the lateral direction, or parallel direction with the axial line $O_e$ of the V edge or bevel grinder E as shown in Fig. 12. Accordingly, when a generally-used noncircular material lens L, as shown in Fig. 11, is subjected to V-edge or-bevel treatment, if the center of the treating edge portion of the material lens L is moved to the lateral movement position $Y_l$ corresponding to the radius vector $\rho_l$ prior to the V-edge or-bevel treatment, the peripheral portion of the material lens L can be applied with an ideal V-edge or-bevel treatment.

However, actually, since the material lens L is laterally moved only so far as to the movement position $Y'_l$ corresponding to the radius vector $\rho_l'$ the V-edge or bevel of the lens after treatment becomes the so-called "rear V-edge or bevel" which is slightly displaced rightwardly as shown in Fig. 12. And, the displacement from such ideal V-edge or bevel position as mentioned becomes more significant as the angles $\alpha$ formed between the straight line including the treating point $\rho$ and the straight line X become larger.

## SUMMARY OF THE INVENTION

It is therefore an object of the present invention to provide a method of grinding a lens and an apparatus for carrying out the method, wherein there can be obtained a lens with a V-edge or bevel predetermined along the whole periphery of the lens or a V-edge or bevel having a V-edge or bevel curve value predetermined by an operator of a lens edging or bevelling machine without producing such displacement due to treatment as mentioned.

In order to achieve the above object, from one aspect of the present invention, there is provided a method according to claim 1.

From another aspect of the invention, there is provided an apparatus according to claim 2.

In the first-mentioned aspect of the invention, the lens shaft is displaced in the axial direction according to the rotation of the lens shaft thereby to bring always the center of a grinding portion at a peripheral portion of the lens to be in alignment with the center of a V-shaped treating groove of the V edge or bevel grinder.

According to the second-mentioned aspect of the invention, the intershaft distance data outputted from the intershaft distance detection means are inputted into the arithmetic means, and the arithmetic means calculates the imaginary treatment radius vector information and the axial direction movement distance of the lens shaft. And, based on such calculated axial direction movement distance of the lens shaft, the drive control means displaces the lens shaft in the axial direction thereby to bring always the center of a grinding portion at a peripheral portion of the lens to be in alignment with the center of a V-shaped treating groove of the V edge or bevel grinder.

## BRIEF DESCRIPTION OF THE DRAWINGS

The nature of the present invention, as well as other objects and advantages thereof, will be readily apparent from a consideration of the following description relating to the accompanying drawings, wherein:

Fig. 1 is a block diagram showing a lens edging or bevelling machine according to one embodiment of the present invention;

Fig. 2 is a flow chart for explaining the action of the lens edging or bevelling machine;

Fig. 3 is a schematic illustration showing the principle of an intershaft distance measurement;

Figs. 4 through 6 are schematic illustrations for showing a method of obtaining a treatment radius vector length;

Fig. 7 is a block diagram showing an intershaft distance measuring apparatus according to a second embodiment of the present invention;

Fig. 8 is a schematic illustration for explaining the action of the second embodiment;

Figs. 9 and 10 are schematic illustrations showing the relation between the diameter of a lens and a lateral movement;

Fig. 11 is an illustration showing the relation between a grinder and a treating point of a lens; and

Fig. 12 is an illustration showing a treating state of the V-edge or bevel.

## DETAILED DESCRIPTION OF THE EMBODIMENTS

One preferred embodiment of the present invention will be described hereunder with reference to the accompanying drawings.

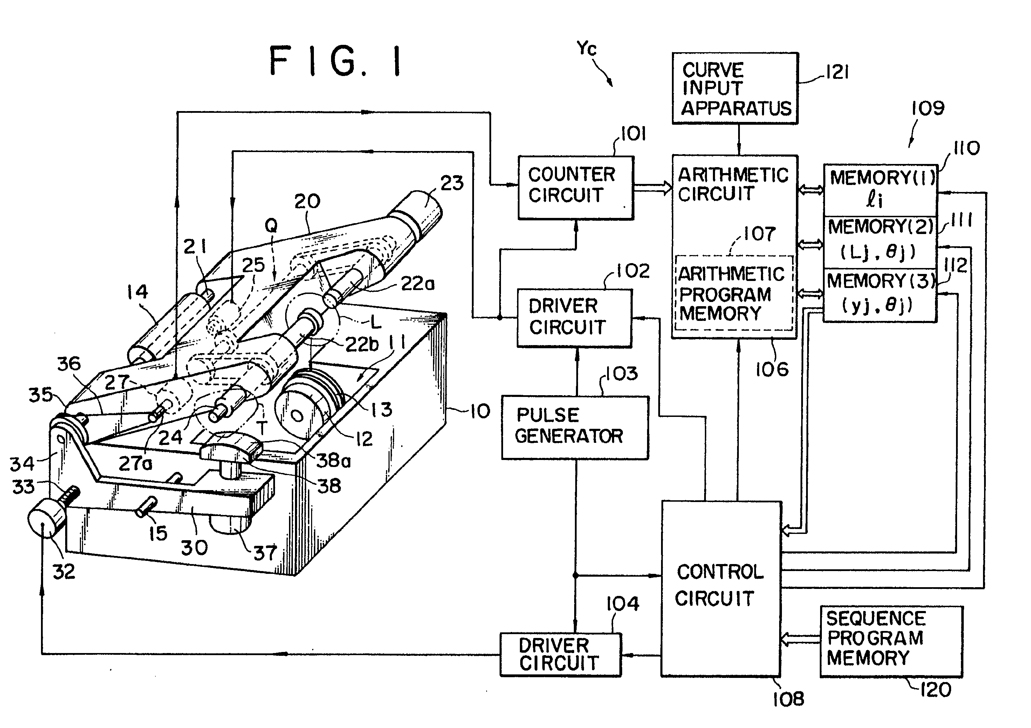

Figs. 1 through 6 illustrate a first embodiment of the present invention, whereby Fig. 1 is a perspective view of an outer appearance of the construction of a lens treatment apparatus or lens edging or bevelling machine according to the present invention together with an electric circuit block diagram of its V-edge or-bevel treatment control system.

A housing 10 is provided with a grinder chamber 11 in which a grinder to be rotated at a high speed by a motor (not shown) is situated. The grinder comprises a coarse grinder 12 and a V edge or bevel grinder 13. Behind the housing 10, a bearing 14 is provided. A carriage revolving shaft 21 is fitted into the bearing 14 for being revolved and moved in the axial direction. The carriage revolving shaft 21 is fixed with a rear end portion of a carriage 20. By this, the carriage 20 is revolvable about the carriage revolving shaft 21 and lidable in the axial direction. Lens shafts 22a, 22b coaxially disposed are held on a free end portion of the carriage 20. A lens L to be treated is clamped by the lens shafts 22a, 22b. The lens shafts 22a, 22b are rotated by a lens shaft motor 25 located within the carriage 20 through a torque transmission mechanism Q known per se. A template T is mounted on the other end of the lens shaft 22b by a template holding means 24 known per se.

At the side of the housing 10, an L-shaped arm member 30 as a carriage lateral movement means is located. The arm member 30 is slidably supported by a shaft-like rail member 15 projected from a side wall of the housing 10. On one end portion 34 of the arm member 30, a revolving shaft 21 of the carriage 20 is mounted in such a manner as to be pivotable but unmovable in the lateral direction. The arm member 30 is threadedly engaged with a feed screw attached to a motor 32 for the use of a lateral movement (Y-axis) at the side of a stationary frame (not shown). And, according to revolution of the motor 32, the arm member 30 moves along the Y-axis. According to the movement of the arm member, the carriage 20 moves by the same amount in the same direction. An X-axis motor 37 is held on the other end portion of the arm member 30. Furthermore, a template supporting table 38 having a known structure is also mounted on the other end portion of the arm member 30. The template T is such arranged as to abut again the upper surface, i.e., template supporting table surface 38a, of the template supporting table 38. The template supporting table surface 38a has the same radius of curvature as the grinding line of the V-edge or bevel grinder 13.

The one end portion 34 of the arm member 30 is fixedly attached with a pulley 35 coaxially provided with the carriage revolving shaft 21. A belt 36 looped around the pulley 35 is looped around a shaft 27a of an encoder 27 situated within the carriage 20. The encoder 27 is adapted to measure an intershaft distance between the axis of rotation of the carriage 20, i.e., lens shafts 22a, 22b, and the axis of rotation of the grinders 12, 13.

The V-edge or-bevel treatment control apparatus YC includes a counter circuit 101 connected to the encoder 27 and adapted to count its measured value, an arithmetic circuit 106 comprising a microprocessor adapted to receive the counted data from the counter circuit 101, a control circuit 108, and a memory circuit 109 having first to third memories 110, 111, 112 adapted to memorize the calculated result of the arithmetic circuit 106. The V-edge or-bevel treatment control apparatus YC includes a sequence program memory 120 for memorizing and storing a control sequence program of the control circuit, and driver circuits 102, 104 adapted to drive control the lens shaft motor 25 and the Y-axis motor 32. Further, the V-edge or-bevel treatment control apparatus YC includes a pulse generator 103 adapted to feed drive pulse to the respective motors 25, 32. The driver circuit 102 is also connected to the counter circuit 101.

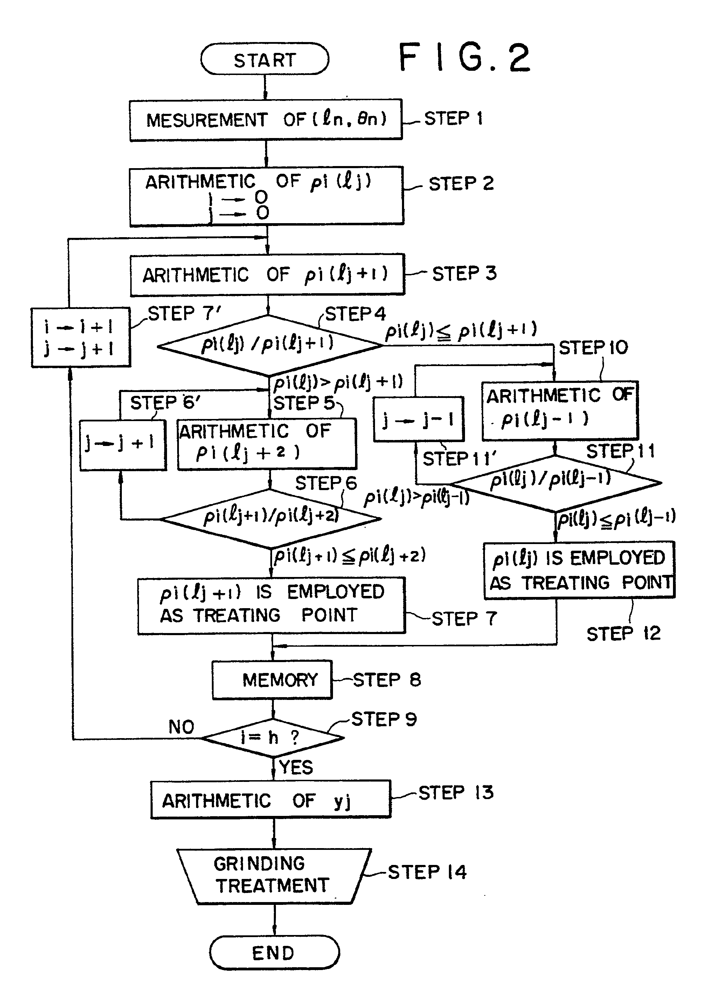

Operation of the above-mentioned apparatus will be described with reference to the flow chart of Fig. 2 together with other constitutions and set conditions.

### STEP 1

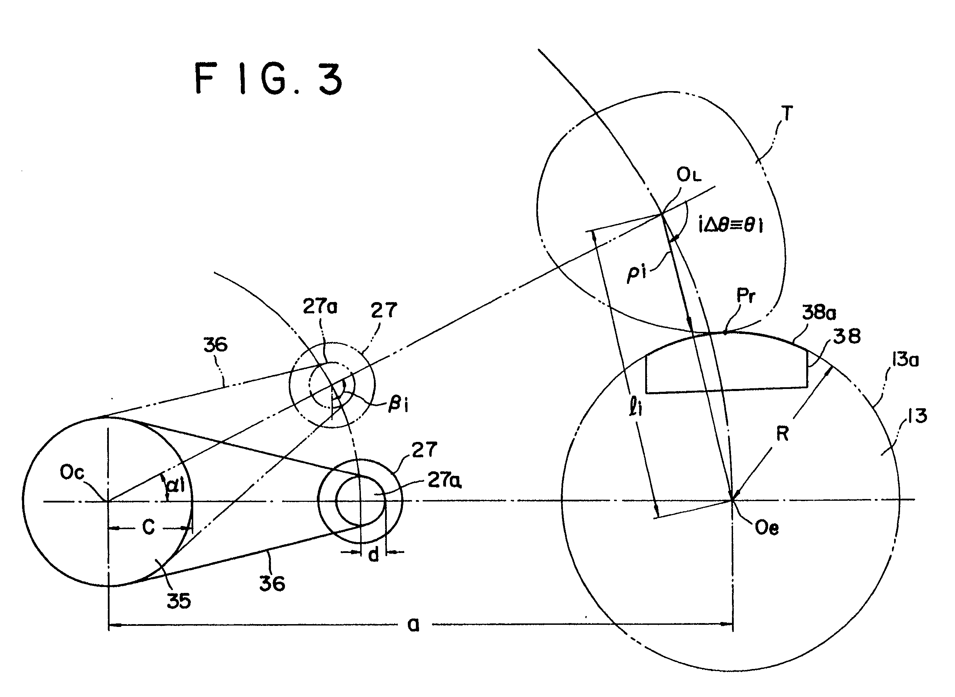

First, the template T is attached to the template holding means 24 on the lens shaft 22b of the carriage 20, as is shown in the schematic illustration of Fig. 3.

Next, the X motor 37 is driven to ligt the template supporting table 38 up and down so that the center of curvature of the template supporting surface 38a of the template supporting table 38 is brought to be coaxis with the center of curvature of the grinding line 13a of the V edge or bevel grinder 13, i.e., the rotary axis $O_e$ of the V edge or bevel grinder 13.

In the above-mentioned state, pulse is fed to the lens shaft motor 25 from the pulse generator 103 through the driver circuit 102 to cause the lens shafts 22a, 22b to be rotated about the center $O_L$ of the lens rotary axis. Due to the rotation of the lens shafts 22a, 22b, the intershaft distance $\ell$ between the grinder rotary axis $O_e$ and the center $O_L$ of the lens rotary axis is varied together with its rotation angles θ. Moreover, the intershaft distance $\ell$ is converted to variations of the rotation angles of the encoder 27. The output of the encoder 27 is counted by the counter circuit 101 and inputted into the arithmetic circuit 106. If the intershaft distance between the grinder rotary axis $O_e$ ans the revolving axis $O_o$ of the carrriage 20 is designated by $\underline{a}$, and the revolving angles of the carriage in the template radius vector $\rho_i$ are designated by $\alpha_i$, the intershaft distance $\ell_i$ in the radius vector is obtained as follow;

$$\ell_i = 2a^2 - 2a^2\cos\alpha_i \quad (1)$$

wherein = 0,1,2,3,... ...n.

If the radius of the pulley 35 is designated by C and the radius of the shaft 27a of the encoder is designated by d, the revolving angles $\alpha_i$ of the carriage has the following relation with the rotary angles $\beta_i$ of the shaft 27a of the encoder 27;

$$2c\pi\gamma_i = 2d\pi\beta_i$$

thus,

$$i = \frac{d}{c} \quad (2)$$

(wherein i = 0,1,2,3,... ...n). Accordingly, the intershaft distance $\ell_i$ can be obtained by measuring the rotary angles $\beta_i$ of the shaft 27a using the encoder 27.

The counter circuit 101 reads pulse for rotating the lens shaft motor 25 generated from the pulse generator through the driver circuit 102 and counts the output from the encoder 27 every unit rotary angles Δθ of the lens shafts 22a, 22b and inputs such counted output $(c_i, \theta_i)$ (i = 0,1,2,3 ,... ...n) into the arithmetic circuit 106. The arithmetic circuit 106 calculates the intershaft distance $\ell_i$ every unit rotation angles Δθ, i.e., the respective radius vectors $\rho_i$, of the lens shafts 22a, 22b according to the above-mentioned formulas (1) and (2) and stores the results in the first memory portion 110 of the memory circuit 109.

Step 2·

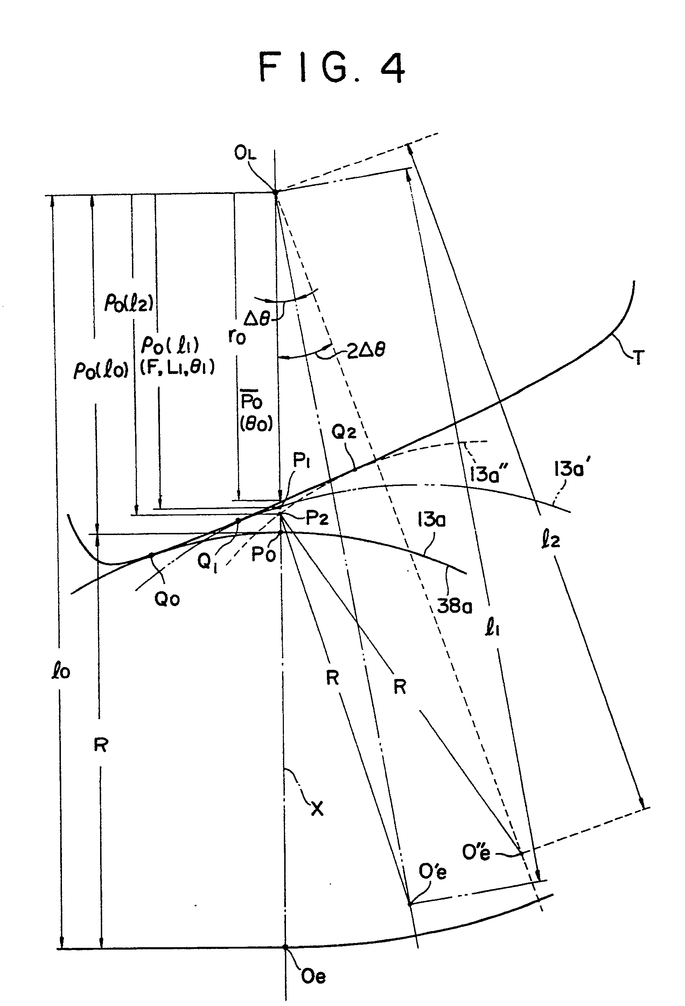

Next, the arithmetic circuit 106 reads the intershaft distance data $(\ell_o, \theta_o)$ memorized in the first memory 110 according to the arithmetic program memory 107 and obtains the distance from the radius R of the grinding line 13a of the V edge or bevel grinder 13 and the intershaft distance $\ell_o$ to the imaginary treating point $P_o$ of the radius vector $\rho_o$ as shown in Fig. 4. More specifically, if the straight line, which connects the center $O_e$ of the rotary axis of the V edge or bevel grinder 13 and the center $O_L$ of the rotary axis of the lens shafts 22a, 22b is designated by X and the intersecting point of the straight line X and the grinding line 13a of the V-edge or bevel grinder 13 is set as imaginary treating point $P_o$, the arithmetic circuit 106 obtains the distance (hereinafter referred to as imaginary treating radius vector length $\rho_i$ ($\ell_j$) from the center $O_L$ of the lens rotary axis to the imaginary treating point $P_o$ using the following formula;

$$\rho_i(\ell_j) = \ell_j - R \quad (3)$$

(wherein i, j = 0,1,2,3,... ...n). In this Step, the imaginary treating radius vector length $\rho_o(\ell_n)$ of the radius vector $\rho_o$ designated as i = 0, j = 0 is obtained from the formula (3) as $\rho_o(\ell_o) = \ell_o - R$.

Step 3

Next, the arithmetic circuit 106 reads the intershaft distance $\ell_1$ from the first memory 110 at the time when the lens shafts 22a, 22b are rotated by unit rotary angles , i.e., the intershaft distance $\ell_1$ of the intershaft distance data $(\ell_1, \theta_1)$ of $\ell_{j+1}$ ($\ell_{o+1} = \ell_1$ in this Step), and the imaginary treating radius vector length $\rho_o$ ($\ell_1$) at the imaginary treating point $P_1$ of the radius vector $\rho_o$ in this intershaft distance $\ell_1$ is obtained as;

$$\rho_o(\ell_1) = \ell_1\cos\Delta\theta + \sqrt{\ell_1^2\cos^2\theta - (\ell_1^2 - R^2)}$$

using the following formula;

$$\rho_i(\ell_j) = \ell_j\cos(\Delta\theta) + \sqrt{\ell_j^2\cos^2(j\Delta\theta) - (\ell_j^2 - R^2)}$$

wherein i, j = 0,1,2,3,... ...n and (i ≠ j).

Fig. 4 is an illustration prepared for the purpose of easier understanding of this relation, in which the V edge or bevel grinder 13 is rotated by Δθ about the lens shaft O rather than the template T is rotated by unit angles Δθ to cause the grinding line 13a of the grinder to abut against the template T at this time. Both these illustrations show the same phenomenon.

Step 4

The imaginary treating radius vector lenght $\rho_i(\ell_j)$ obtained in Step 2 is compared with $\rho_i$ ($\ell_{j+1}$). In this Step, $\rho_o(\ell)$ and $\rho_o(\ell_1)$ are compared since i = 0, j = 0 are given. Symbolic mark "/" in the flow chart of Fig. 2 means that values before and after the symbolic mark are to be compared (the same shall apply hereinafter). And, if $\rho_i(\ell_j) \leqq \rho_i(\ell_{j+1})$, i.e., $\rho_o(\ell_o) \leqq \rho_o(\ell_1)$ is satisfied, then it goes to Step 10. If $\rho_i(\ell_j) > \rho_i(\ell_{j+1})$, i.e., $\rho_o(\ell_o) > \rho_o(\ell_1)$, then it goes to Step 5.

In the example of Fig. 4, since $_o(\ell_o) > _o(\ell_1)$ is given, it goes to Step 5.

Step 5

The arithmetic circuit 106 reads the intershaft dis-

tance data ($\ell_2$, $\theta_2$) of $\ell_{j+2}$ ($\ell_{o+2} \equiv \ell_2$ in this Step) at the time when the template is further rotated by unit angles $\Delta\theta$ from the memory 110 and obtains the imaginary treatment radius vector length $\rho_o(\ell_2)$ using the above formula (4).

## Step 6

The imaginary treatment radius vector $\rho_i(\ell_{j+1})$ of Step 4 is compared with the imaginary treatment radius vector length $\rho_i(\ell_{j+2})$ of Step 5. Since i = 0, j = 0 are given in this Step, $\rho_o(\ell_1)$ and $\rho_o(\ell_2)$ are compared. And, if $\rho_i(\ell_{j+1}) \leqq \rho_i(\ell_{j+2})$ is satisfied, then it goes to Step 7. If $\rho_i(\ell_{j+1}) > \rho_i(\ell_{j+2})$ is satisfied, then it goes to Step 6'. In the example of Fig. 4, since $\rho_o(\ell_1) > \rho_o(\ell_2)$ is satisfied, it goes to the following Step 7.

## Step 6'

If it goes to this Step when $\rho_i(\ell_{j+1}) > \rho_i(\ell_{j+2})$, i.e., $\rho_o(\ell_1) > \rho_o(\ell_2)$ is satisfied in the preceding Step 6, the imaginary treatment radius vector lenght $\rho_i(\ell_{(j+1)+2})$ is obtained from the intershaft distance $\ell_{(j+1)+2}$ of the intershaft distance data $\{\ell_{(j+1)+2}, \theta_{(j+1)+2}\}$ which is equivalent to that the template T is further rotated by unit angles $\Delta\theta$. And, the answer is compared with the data $\rho_i(\ell_{j+2})$ already obtained. In this way, imaginary treatment radius vector lengths are obtained and compared based on the intershaft distance data to be obtained until the imaginary treatment radius vector lenght based on the renewed intershaft distance becomes smaller than that of the intershaft distance obtained in the preceding procedure.

## Step 7

If it is interpreted that $\rho_i(\ell_{j+1}) \leqq \rho_i(\ell_{j+2})$ is satisfied in the Step 6, $\rho_i(\ell_{j+1})$ is interpreted as the treatment radius vector length to be actually treated by the grinder 13 on the radius vector $\rho_i$. Since i = 0, j = 0 are given at this stage, i.e., in the example of Fig. 4, it is interpreted as the treatment radius vector length $\rho_o(\ell)$ on the radius vector $\rho_o$.

## Step 8

The arithmetic circuit 10 causes the second memory 111 of the memory circuit 109 to memorize the treatment radius vector length data ($L_j$, $\theta_j$) by handling the treatment radius vector length $\rho_i(\ell_{j+1})$ which was interpreted in the preceding Step 7 and the lens shaft rotary angles $\theta_{j+1}$ corresponding to the intershaft distance $\ell_{j+1}$ thereof as one set. In the example of Fig. 4, the treatment radius vector length ($L_1$, $\theta_1$) is memorized in the form of $\rho_o(\ell_1) = L_1$.

## Step 9

The procedures in the above-mention Step 3 through Step 8 are repeated in consecutive order with regard to each radius vector $\rho_i$ until treatment radius vector lengths are obtained on all radius vectors $\rho_i$(i=0,1,2,3,... ... ...n) of the template T. For example, in the example of Fig. 4, since the treatment radius vector data ($L_1$, $\theta_1$) were obtained on the radius vector $\rho_o$, it goes to the radius vector $\rho_o$ from the radius vector $\rho_1$ according to Step 7, the above-mentioned Steps 3 through 8 are repeated on a new radius vector $\rho_1$, a treatment radius vector length is obtained with respect to, the radius vector $\rho_1$, and the result is memorized in the second memory 111. The same procedure as mentioned is repeated until a treatment radius vector on the last radius vector $\rho N$ is calculated and obtained and the results are memorized in the second memory portion 111.

## Step 10

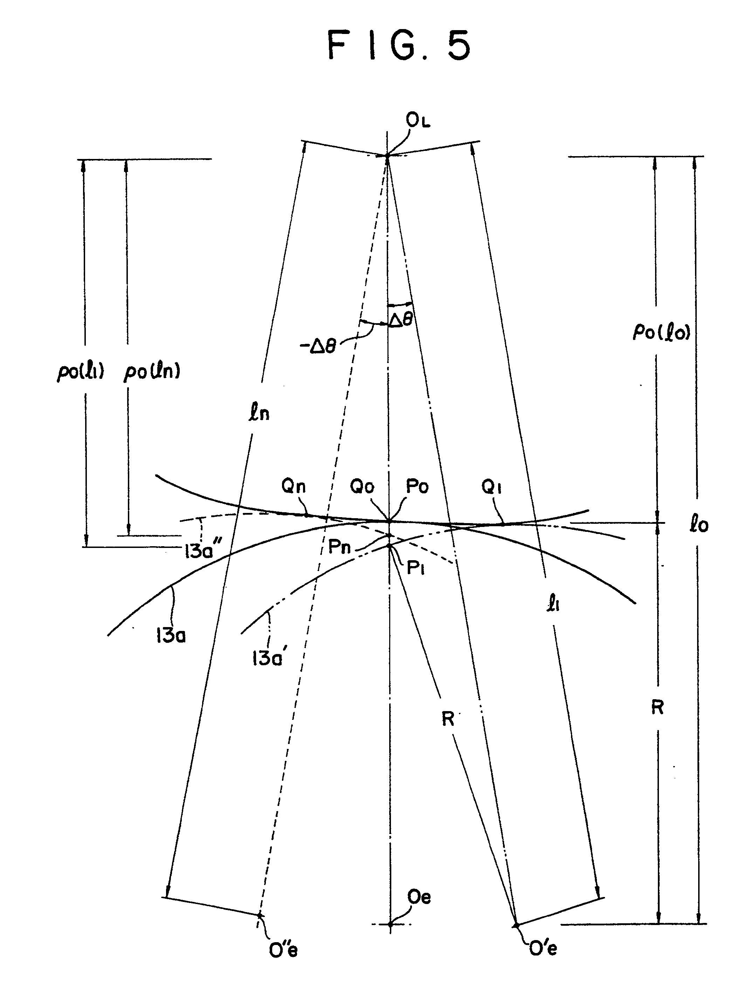

If $\rho_i(\ell_j) \leqq \rho_i(\ell_{j+1})$ was satisfied in the above-mentioned Step 4, then it moves to this Step, and an imaginary treatment radius vector length $\rho_i(\ell_{j-1})$ is obtained from the formula (4) based on the intershaft distance $\ell n$ of the intershaft distance data ($\ell n$, $\theta n$) of the rotary angles $\theta$ n formed by reversely rotating the template T about the lens shafts 22a, 22b by unit angles $\Delta\theta$ as shown in Fig. 5. In the example of Fig. 5, the imaginary treatment radius vector length $\rho_o(\ell n)$ is obtained by using the intershaft distance $\ell_{0-1}, \equiv \ell n$ with respect to the radius vector $\rho_o$ and setting $\rho_o(\ell n)$ as follow;

$$\rho_o(\ell n) = \ell n \cos n\Delta\theta + \sqrt{\ell n^2 \cos^2\Delta\theta - (\ell n^2 - R^2)}$$

## Step 11

The imaginary treatment radius vector $\rho_i(\ell_j)$ obtained in Step 2 is compared with the imaginary treatment radius vector length $\rho_i(\ell_{(j-1)})$ obtained in the preceding Step 10. And, if $\rho_i(\ell_j) \leqq \rho_i(\ell_{j-1})$ is satisfied, then it goes to next Step 12. If $\rho_i(\ell_j) > \rho_i(\ell_{j-1})$ is satisfied, then it goes to Step 11'. In the example of Fig. 5, since $\rho_o(\ell_0)$ is compared with $\rho_o(\ell_{0-1})$, i.e., $\rho_o(\ell n)$ wherein i=0, j=0 are given. If $\rho_o(\ell_o) > \rho_o(\ell n)$ is satisfied, then it goes to next Step 12.

## Step 11'

If it was interpreted in the preceding Step that $\rho_i(\ell_j) > \rho_i(\ell_{j-1})$ was satisfied, then it moves to this Step. The arithmetic circuit 106 calculates an imaginary treatment radius vector length $\rho_j(\ell_{(j-1)-1})$ according to the formula (4) using an intershaft distance $\ell_{(j-1)-1}$ (not shown) of the intershaft distance data ($\ell_{(j-1)-1}$, $\theta_{(j-1)-1}$) as an intershaft distance data, i.e., new intershaft distance $\ell_{j-1}$, obtained when the template T is further reversely rotated about the lens shaft O by unit angles and compares the answer with the last obtained imaginary treatment radius vector length $\rho_i(\ell_{j-1})$. In this way, the above-mentioned procedures are repeated in sequential order until the renewed imaginary treatment radius vector length becomes smaller than the imaginary treatment radius vector length obtained in the preceding procedure.

## Step 12

If $\rho_i(\ell_j) \leqq \rho_i(\ell_{j-1})$ was satisfied in the preceding Step 11, then it goes to this Step. And, the arithmetic circuit 106 interpretes a treatment radius vector length $L_i = \rho_i(\ell_j)$ actually ground by the grinder 13 on the radius vector and combines its with rotary angles $\theta_j$ of the template T corresponding to this intershaft distance $\ell_j$ to serve as treatment radius vector data $(L_j, \theta_j)$.

In the example of Fig. 5, i =0, j=0 are given, and after these were interpreted as treatment radius vector lengths, the treatment radius vector length data $(L_j, \theta_j)$ become $L_j= \rho_o(\ell_o)=L_o$, $\theta_j=\theta_o$ thereby to obtain data $(L_o, \theta_o)$, and such obtained data are memorized in the second memory 111.

When the procedure is progressed upto Step 9, treatment radius vector length data $(L_o, \theta_o)$, $(L_1, \theta_1)$, $(L_2, \theta_2)$, $(L_3, \theta_3)$ ,... ... $(L_j, \theta_j)$... ... (Ln, $\theta$n) are obtained every rotary angle of the lens shafts 22a, 22b, and such obtained data are memorized in the second memory 111.

## Step 13

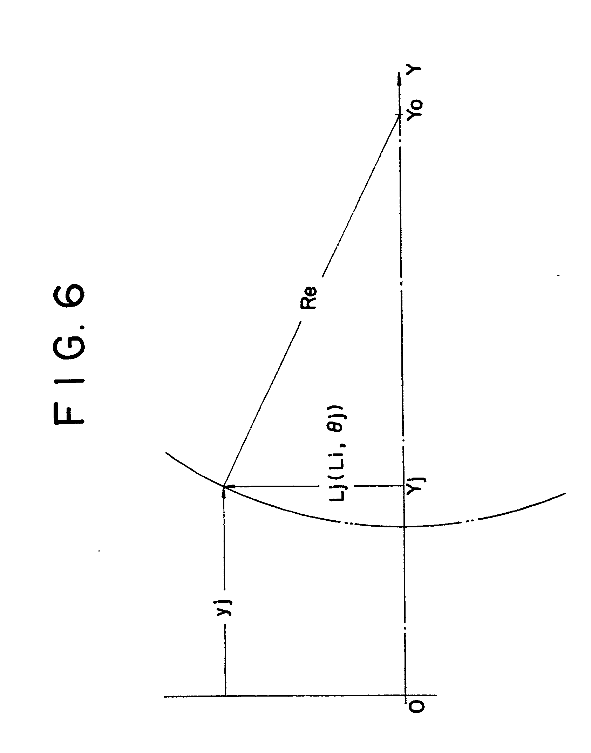

The arithmetic circuit 106 obtains a radius of curvature of the V-edge or bevel curve based on, as shown in Fig. 6, the respective treatment radius vector length data $(L_j, \theta_j)$ and a predetermined V-edge or bevel curve Ce or a V-edge or bevel curve value Ce inputted from a curve input apparatus 121 by setting Re as follow;

$$Re = \frac{n-1}{Ce} \times 1000 \quad (5)$$

wherein n is a refractive power of a spectacle lens for which 1.52 is usually used. Furthermore, the lateral movement radius vector $Y_j$ per each rotary angle $\theta_j$ is obtained by setting $Y_j$ as follow;

$$Y_j = Y_o - Y_j$$
$$= Re^2 - L_j^2 \quad (6)$$

Thus obtained answers are memorized in the third memory 112 as lateral movement radius vector data $(Y_i, \theta_j)$.

## Step 14

The control circuit 108, when performing the V-edge or-bevel treatment by means of the template copy grinding treatment known per se, inputs pulse generated from the pulse generator 103 into the lens shaft motor 25 through the driver circuit 102 to rotate the lens shaft motor 25 arid reads lateral movement amount data $Y_j$ corresponding to the rotary angles $\theta_j$(j=0,1,2,... ...n) from the third memory 112 when a pulse number corresponding to the unit rotary angles $\Delta\theta$ of the lens shaft motor 25 according to this rotation was counted, and controls the rotation of the Y axis motor 32 with the pulse generated from the pulse generator 103 corresponding to the that amount through the driver circuit 105, and also controls the lateral feed amount of the carriage 20. By this, the lens is given a desired V-edge or bevel curve.

In the above-described embodiment, an encoder 27 was used to measure the intershaft distance $\ell_i$. However, the present invention is not necessarily limited to this. For example, when the revolving radius of a carriage is extremely large compared with the intershaft distance between the lens shaft and the grinder, the intershaft distance $\ell i$ may be measured by using the template supporting table 38. Its structure is given in the following second embodiment of the present invention.

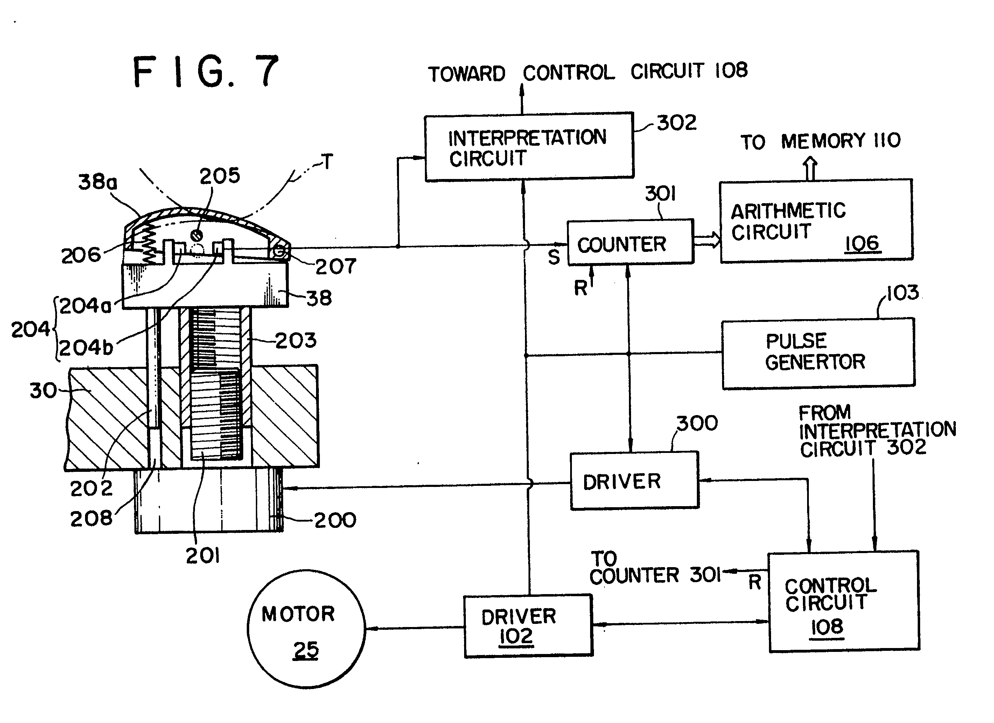

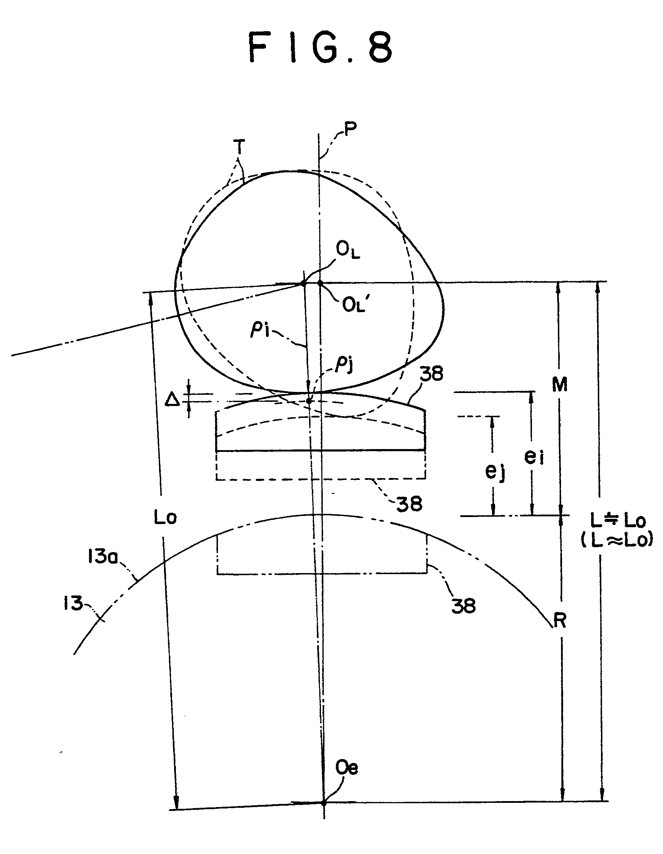

A second embodiment of the present invention will be described hereinafter with reference to Figs. 7 and 8.

In Fig. 7, an abutment piece 38a for abutting a template of a template supporting table 38 is revolvably supported about a shaft 207 but sprung upwardly by a spring 206 when the abutment piece 38a is not abutted against the template T. The abutment piece 38a is bridged over with a shading rod 205. On the upper surface of the template supporting table 38, there is provided a detector 204 comprising a pair of light emitting element 204a and light receiving element 204b, optical paths of which are shadable with this shading rod 205.

A female screw 203 fixed to the under surface of the template supporting table 38 is slidably inserted into a hole portion of the arm member 30 and engaged with a feed screw 201 attached to a pulse motor 200. Further, a guide rail 202 is mounted on the under surface of the template supporting table 38 and inserted into a guide hole 208 of the arm member 30.

There will be described the constitution of an electric system for the use of measuring an intershaft distance according to this embodiment.

In Fig. 8, the template T is mounted on the lens shaft 22b of the carriage 20 shown in Fig. 1 and the carriage 20 is held in its predetermined initial position as shown in Fig. 1 by known holding means. In the state just mentioned, the control circuit 108 of Fig. 7 controls a driver circuit 300 to feed pulse generated from the pulse generator 103 to the motor 200, thereby to rotate normally the pulse motor 200 to lift the template supporting table 38 upwardly. The pulse-number fed to the motor 200 this time is counted by a counter 301.

And, as shown in Fig. 8, when the abutment piece 38a of the template supporting table 38 abuts against the template T, the detector 204 detects it and outputs a detection signal as stop signal S to the counter 301 so that the counter 301 stops counting. The counter 301 inputs the counted value of that time into the arithmetic circuit 106. When the revolving radius of the carriage 20 is large compared with the intershaft distance $L_o$ between the V edge or bevel grinder 13 and the lens L, if the known distance between the rotary center $O_L$ of the lens shafts 22a, 22b and the center $O'_L$ of a copied image thereof on a perpendicular line P is represented by M, the intershaft distance $L_o$ is given from this intershaft distance M and the radius R of the grinder as follow;

$$L = M + R$$

And, the intershaft distance $\ell_i$ of the meridian $\rho_i$ is obtained at the arithmetic circuit 106 from the increased amount $e_i$ of the template supporting table as follow;

$$\ell_i = (M - e_i) + R \quad (7)$$

(wherein i= 0,1,2,3,...j...N) and such obtained answer is memorized in the first memory 110. Then, the control circuit 108 controls the driver 300 to rotate reversely the motor 200 and move downwardly the template supporting table 38 by a predetermined distance Δ, and thereafter rotate the motor 25 through the driver 102, thereby to rotate the template T by unit angles Δθ. And, the control circuit 108, when the template T was rotated by unit angles, outputs a reset signal to the counter 301 to reset the counter 301. When the detector 204 outputs a detection signal in the midway of rotation by the unit angles, an interpretation circuit 302, upon receipt of the command, interprets that the template supporting table 38 is not moved lower than the length of next meridian $\rho_{i+1}$ and outputs to the control circuit 108 accordingly. Upon receipt of a command from the interpretation circuit 302, the control circuit 108 moves the template supporting table 38 further downwardly. Further, when the lens shafts 22a, 22b are rotated by unit angles, the control circuit 108 rotates normally the motor 200 through the driver 300 again and moves the template supporting table 38 upwardly and measures the intershaft distance $\ell_{i+1}$ of the meridian $\rho_{i+1}$. The same procedure is repeated until intershaft distances for all radius vectors are obtained.

As described in the foregoing, the first described invention comprises the steps of obtaining intershaft distance data $(\ell_i, \theta_i)$ between the rotary axis of a V-edge or bevel grinder and the axis of a lens to be edged or bevelled when the lens will be edged or bevelled based on the configuration of a template, obtaining an imaginary treatment radius vector information $(L_j, \theta_j)$ of the lens from such obtained intershaft distance data, obtaining a moving amount $(Y_j, \theta_j)$ in the axial direction of the axis of the lens when the lens will be subjected to V-edge or-bevel treatment according to the imaginary treatment radius vector information, and moving the lens in the axial direction of the axis of the lens by the moving amount $(Y_j)$ in the axial direction corresponding to the rotary angles $(\theta_j)$ of the axis of the lens when the lens is subjected to the V-edge or-bevel treatment and applying the V-edge or-bevel treatment to the lens. Accordingly, when the peripheral portion of a lens is subjected to a V-edge or-bevel treatment, treatment displacement as seen in the conventional method is not produced. Furthermore, there can be obtained a lens having a predetermined V-edge or bevel on the whole periphery of the lens or a lens having a V-edge or bevel curve value set by an operator of a lens edging or bevelling machine.

The second-described invention is constituted as such that a lens grinding apparatus including a pair of coaxial lens shafts capable of clamping a lens to be edged or bevelled, one of the lens shafts being detachably attached with a template, a V-edge or bevel grinder adapted to edge or bevel a peripheral portion of the lens, and a template supporting table having a template supporting surface, against which the template is abutted, having the same radius of curvature as the radius of the V-edge or bevel grinder, characterized in that the lens grinding apparatus comprises intershaft distance measuring means for obtaining an intershaft distance between the lens shaft and a rotary shaft of the V-edge or bevel grinder from relative movement amount between the template and the template supporting surface at the time when the lens will be subjected to the V-edge or-bevel treatment, first arithmetic means for obtaining an imaginary treatment radius vector $(L_j, \theta_i)$ of the lens based on data $(\ell_i, \theta_i)$ from the intershaft distance measuring means, second arithmetic means for obtaining an axial direction movement amounts $(Y_j, \theta_j)$ of the lens shaft from the imaginary treatment radius vector $(L_j, \theta_j)$ at the time when the lens will be subjected to the V-edge or-bevel treatment, and drive control means for moving the lens by the axial direction movement amount $(Y_j)$ corresponding to rotation angles $(\theta_j)$ of the lens at the time when the lens is subjected to the V-edge or-bevel treatment. Accordingly, even if the template is replaced with other member, a movement control can be performed in the axial direction of the lens shaft by immediately calculating the displacement amount in the axial direction of the lens shaft based on its configuration. Furthermore, in the case the intershaft distance measurement means comprises a carriage oscillation angle measurement means comprising a pulley coaxially fixed with the revolving shaft of the carriage having the lens shaft, an encoder situated within the carriage and a belt looped around the rotary shaft of the encoder and the pulley, and arithmetic means for obtaining the intershaft distance from the measurement result of the carriage oscillation angle measurement means, the intershaft distance can be accurately measured and calculated. Furthermore, in the case the intershaft distance measurement apparatus comprises template support movement means for reciprocally moving the template supporting surface with respect to an edge surface of the template, a detection means for detecting the movement amount of the template support movement means, and an arithmetic means for obtaining the intershaft distance from the movement amount, it is no more required to provide an intershaft distance measurement apparatus separately. Thus, the intershaft distance can be measured by comparatively few parts.

While it will be apparent that the preferred embodiments of the present invention herein disclosed is well calculated to fulfill the object above state, it will be appreciated that the present invention is susceptible to modification, variation and change without departing from the proper scope or fair meaning of the accompanying claims.

## Claims

1. A method of grinding a V-edge or V-bevel on a lens comprising the steps of :
- measuring an intershaft distance ($\ell_i$, $\theta_i$) between the rotary axis of a V-edge or bevel grinder and the axis of a lens to be edged or bevelled when the lens will be edged or bevelled based on the configuration of a template, for successive angular positions of said template, and storing in memory the relationship between said intershaft distance and angular positions of the template ;
- calculating an imaginary treating radius vector length (Lj) for successive angular positions of the template, the vector length for each angular position of the template being the difference between the measured intershaft distance and the radius of the grinder, and storing in memory the relationship between the calculated imaginary treating radius vector length and angular position of the template ;
- calculating, for each angular position of the template and on the basis of the calculated imaginary treating radius vector length, the amount by which the lens should be moved in the direction of its own axis to ensure that for that angular position the lens is correctly positioned relative to the grinder for the V edge or V bevel to be in the desired position, and storing in memory the relationship between required axial movement of the lens and angular position of the template ;
- measuring the angular position of the template as V-edge or V-bevel grinding is being performed, and moving the lens axially in dependence on the measured angular position, in accordance with the stored relationship between calculated axial movement and angular position of the template.

2. An apparatus for grinding a V-edge or V-bevel on a lens, including a pair of coaxial lens shafts capable of clamping a lens to be edged or bevelled, one of said shafts supporting a template, a V-edge or bevel grinder adapted to edge or bevel a peripheral portion of the lens, and a template supporting table having a template supporting surface, against which said template is abutted, having the same radius of curvature as the radius of the V-edge or bevel grinder CHARACTERIZED IN THAT
said lens grinding apparatus comprises :
- intershaft distance measuring means for obtaining an intershaft distance between said lens shaft and a rotary shaft of said V-edge or bevel grinder, for successive angular positions of said template relative to said template supporting surface, at the time when said lens will be subjected to the V-edge or bevel treatment ;
- means for storing in memory the relationship between said interface distance and angular positions of the template ;
- first arithmetic means for calculating an imaginary treatment radius vector length (Lj) for successive angular positions of the template, the vector length for each angular position of the template being the difference between the measured intershaft distance and the radius of the grinder ;
- means for storing in memory the relationship between the calculated imaginary treating radius vector length and angular position of the template ;
- second arithmetic means for calculating, for each angular position of the template and on the basis of the calculated imaginary treating radius vector length, the amount by which the lens should be moved in the direction of its own axis to ensure that for that angular position the lens is correctly positioned relative to the grinder for the V-edge or V-bevel to be in the desired position ;
- means for storing in memory the relationship between required axial movement of the lens and angular position of the template ;
- means for measuring the angular position of the template as V-edge or V-bevel grinding is being performed ; and
- drive control means for moving the lens axially in dependence on the measured angular position, in accordance with the stored relationship between calculated axial movement and angular position of the template.

3. An apparatus as claimed in claim 2, wherein said intershaft distance measurement means comprises a carriage oscillation angle measurement means comprising a pulley coaxially fixed with a revolving shaft of said carriage having said lens shaft, an encoder situated within said carriage and a belt looped around said rotary shaft of the encoder and said pulley, and arithmetic means for obtaining said intershaft distance from the measurement result of said carriage oscillation angle measurement means.

4. An apparatus as claimed in claim 2, wherein said intershaft distance measurement apparatus comprises template support movement means for reciprocally moving the template supporting surface with respect to an edge surface of said template, a detection means for detecting the movement amount of said template support movement means, and an arithmetic means for obtaining the intershaft distance from said movement amount.

## Revendications

1. Procédé de rectification d'un chant en V ou d'un biseau en V sur une lentille, comprenant les étapes de :
    – mesure d'une distance entre-axe ($\ell_i$, $\theta_i$) entre l'axe de rotation d'une rectifieuse de chant ou biseau en V et l'axe d'une lentille à traiter sur le chant ou à biseauter quand la lentille sera traitée sur le chant ou biseautée sur la base de la configuration d'un gabarit, pour des positions angulaires successives dudit gabarit, et enregistrement en mémoire de la relation entre ladite distance entre-axe et les positions angulaires du gabarit ;
    – calcul d'une longueur de vecteur rayon de traitement idéal ($L_j$) pour des positions angulaires successives du gabarit, la longueur du vecteur pour chaque position angulaire du gabarit étant la différence entre la distance entre-axe mesurée et le rayon de la rectifieuse, et enregistrement du mémoire de la relation entre la longueur calculée du vecteur rayon de traitement idéal et la position angulaire du gabarit ;
    – calcul, pour chaque position angulaire du gabarit et sur le base de la longueur calculée du vecteur rayon de traitement idéal, de la quantité selon laquelle la lentille devrait être déplacée dans la direction de son axe propre pour assurer que, pour cette position angulaire, la lentille est correctement placée par rapport à la rectifieuse pour que le chant en V ou le biseau en V soit dans la position souhaitée, et enregistrement en mémoire de la relation entre le déplacement axial requis de la lentille et la position angulaire du gabarit ;
    – mesure de la position angulaire du gabarit lorsque la rectification du chant en V ou biseau en V est effectuée, et déplacement axial de l'objectif en fonction de la position angulaire mesurée, selon la relation enregistrée entre le déplacement axial calculé et la position angulaire du gabarit.

2. Appareil pour rectifier un chant en V ou biseau en V sur une lentille, incluant une paire d'axes de lentille coaxiaux capables de bloquer une lentille à traiter sur le chant ou à biseauter, un desdits axes supportant un gabarit, une rectifieuse de chant ou biseau en V adaptée pour traiter le chant ou biseauter une partie périphérique de la lentille, et une table de support de gabarit ayant une surface de support de gabarit, contre laquelle ledit gabarit vient en butée, ayant le même rayon de courbure que le rayon de la rectifieuse de chant ou biseau en V
caractérisé en ce que
ledit appareil de rectification de lentille comprend :
    – des moyens de mesure de distance entre-axe pour obtenir une distance entre-axe entre ledit axe de lentille et un axe de rotation de ladite rectifieuse de chant ou biseau en V, pour des positions angulaires successives dudit gabarit relativement à ladite surface de support de gabarit, au moment où ledit objectif sera soumis au traitement de chant ou biseau en V ;
    – des moyens d'enregistrement en mémoire de la relation entre ladite distance entre-axe et les positions angulaires du gabarit ;
    – des premiers moyens arithmétiques pour calculer une longueur de vecteur rayon de traitement idéal ($L_j$) pour des positions angulaires sucessives du gabarit, la longueur du vecteur pour chaque position angulaire du gabarit étant la différence entre la distance entre-axe mesurée et le rayon de la rectifieuse ;
    – des moyens d'enregistrement en mémoire de la relation entre la longueur calculée du vecteur rayon de traitement idéal et la position angulaire du gabarit ;
    – des seconds moyens arithmétiques pour calculer, pour chaque position angulaire du gabarit et sur la base de la longueur calculée du vecteur rayon de traitement idéal, la quantité selon laquelle la lentille devrait être déplacée dans la direction de son axe propre pour assurer que, pour cette position angulaire, la lentille est correctement placée par rapport à la rectifieuse pour que le chant en V ou le biseau en V soit dans la position souhaitée ;
    – des moyens pour enregistrer en mémoire la relation entre le déplacement axial requis de la lentille et la position angulaire du gabarit ;
    – des moyens de commande d'entraînement pour déplacer la lentille axialement en fonction de la position angulaire mesurée, selon la relation enregistrée entre le déplacement axial calculé et la position angulaire du gabarit.

3. Appareil selon la revendication 2, dans lequel lesdits moyens de mesure de distance entre-axe comprennent un moyen de mesure de l'angle de basculement d'un chariot, comprenant une poulie fixée coaxialement à un axe de rotation dudit chariot ayant ledit axe de lentille, un codeur situé à l'intérieur dudit chariot et une courroie formant une boucle autour dudit axe de rotation du codeur et de ladite poulie, et des moyens arithmétiques pour obtenir ladite distance entre-axe à partir du résultat de mesure dudit moyen de mesure de l'angle de basculement du chariot.

4. Appareil selon la revendication 2, dans lequel ledit dispositif de mesure de distance entre-axe comprend des moyens de déplacement du support de gabarit pour déplacer selon un mouvement de va-et-vient la surface de support de gabarit par rapport à une surface de chant dudit gabarit, un moyen de détection pour détecter la quantité de déplacement desdits moyens de déplacement du support de gabarit et des moyens arithmétiques pour obtenir la distance entre-axe à partir de ladite quantité de déplacement.

**Patentansprüche**

1. Verfahren zum Schleifen einer V-förmigen Kante oder eines V-förmigen Einschnitts an einer Linse mit folgenden Schritten:
   – messen eines Abstandes ($\ell i, \theta i$) zwischen der Drehachse eines V-Kanten oder -Einschnitt-Schleifers und der Achse der mit der Kante oder den Einschnitt zu versehenden Linse, wenn die Linse unter Zugrundelegung der Gestaltung einer Lehre mit der Kante oder dem Einschnitt versehen werden soll, für aufeinanderfolgende Winkelpositionen der Lehre und Speichern der Beziehung zwischen dem Abstand und den Winkelpositionen der Lehre in einem Speicher;
   – Berechnen einer imaginären Behandlungsradius-Vektorlänge (Lj) für aufeinanderfolgende Winkelpositionen der Lehre, wobei die Vektorlänge für jede Winkelposition der Lehre die Differenz zwischen dem gemessenen Abstand und dem Radius des Schleifers ist und Speichern der Beziehung zwischen der berechneten imaginären Behandlungsradius-Vektorlänge und der Winkelposition der Lehre;
   – Berechnen für jede Winkelposition der Lehre und auf der Grundlage der berechneten imaginären Behandlungsradius-Vektorlängen der Größe, um die die Linse in Richtung ihrer eigenen Achse verschoben werden soll, um sicherzustellen, daß für diese Winkelposition die Linse relativ zum Schleifer korrekt positioniert ist, damit die V-Kante oder der V-Einschnitt in der gewünschten Stellung ist und Speichern der Beziehung zwischen notwendiger axialer Bewegung der Linse und der Winkelposition der Lehre;
   – Messen der Winkelposition der Lehre bei der Durchführung des V-Kanten- oder V-Einschnitt-Schleifvorganges und axiales Bewegen der Linse in Abhängigkeit von der gemessenen Winkelposition in Übereinstimmung mit der gespeicherten Beziehung zwischen berechneter axialer Bewegung und Winkelposition der Lehre.

2. Vorrichtung zum Schleifen einer V-förmigen Kante oder eines V-förmigen Einschnittes an einer Linse mit zwei koaxialen Linsenwellen, die die zu bearbeitende Linse festklemmen, wobei eine der Wellen eine Lehre trägt, mit einem V-Kantenoder V-Einschnitt-Schleifer, der einen Umfangsbereich der Linse mit einer Kante oder Einschnitt versieht, mit einem Lehrenabstütztisch, der eine Stützfläche zum Abstützen der Lehre aufweist und gegen die die Lehre stößt, und der den gleichen Krümmungsradius wie der V-Kantenoder Einschnitt-Schleifer hat,
**gekennzeichnet durch:**
eine Einrichtung zur messung des Abstandes
   – zwischen der Linsenwelle und der Drehwelle des V-Kanten- oder V-Einschnitt-Schleifers für aufeinanderfolgende Winkelpositionen der Lehre relativ zu der Stützfläche der Lehre zum Zeitpunkt, wenn die Linse der V-Kanten oder V-Einschnitt-Behandlung unterworfen werden wird,
   eine Speichereinrichtung zum Speichern der Beziehung zwischen dem Abstand und den Winkelpositionen der Lehre;
   – eine erste arithmetische Einrichtung zur Berechnung einer imaginären Behandlungsradius-Vektorlänge (Lj) für aufeinanderfolgende Winkelpositionen der Lehre, wobei die Vektorlänge für jede Winkelposition der Lehre die Differenz zwischen dem gemessenen Abstand und dem Radius des Schleifers ist;
   – eine Speichereinrichtung zum Speichern der Beziehung zwischen der berechneten imaginären Behandlungsradius-Vektorlänge und Winkelposition der Lehre;
   – eine zweite arithmetische Einrichtung zur Berechnung für jede Winkelposition der Lehre und auf der Grundlage der berechneten imaginären Behandlungsradius-Vektorlänge der Größe, um die die Linse in Richtung ihrer eigenen Achse verschoben werden soll, um sicherzustellen, daß für diese Winkelposition die Linse relativ zum Schleifer korrekt angeordnet ist, damit die V-Kante oder der V-Einschnitt sich in der gewünschten Stellung befindet;
   – eine Speichereinrichtung zum Speichern der Beziehung zwischen der verlangten axialen Bewegung der Linse und der Winkelposition der Lehre;
   – eine Einrichtung zur messung der Winkelposition der Lehre, wenn das V-Kanten- oder V-Einschnitt-Schleifen durchgeführt wird, und
   – eine Antriebssteuereinrichtung zum Bewegen der Linse axial in Abhängigkeit der gemessenen Winkelposition in Übereinstimmung mit der gespeicherten Beziehung zwischen der berechneten axialen Bewegung und der Winkelposition der Lehre.

3. Vorrichtung nach Anspruch 1, dadurch gekennzeichnet, daß die Einrichtung zur messung des Abstandes eine meßeinrichtung für den Wagenschwenkwinkel umfaßt, die eine koaxial mit der Drehwelle des die Linsenwelle aufweisenden Wagens befestigte Riemenscheibe, einen in dem Wagen angeordneten Kodierer und einen um die Drehwelle des Kodierers und der Riemenscheibe laufenden Riemen und arithmetische Mittel zum Erhalten des Abstandes aus dem meßergebnis der meßeinrichtung für den Wagenschwenkwinkel aufweist.

4. Vorrichtung nach Anspruch 2, dadurch gekennzeichnet, daß die Einrichtung zur messung des Abstandes mittel zum Bewegen der Lehrenabstützung für eine reziproke Bewegung der Stützfläche der Lehre in bezug auf eine Kantenfläche der Lehre, Abtastmittel zum Feststellen der Größe der Bewegung der mittel zum Bewegen der Lehrenabstützung und arithmetische mittel zum Erhalten des Abstandes aus der Größe der Bewegung aufweist.

# F I G. I

EP 0 236 182 B1

FIG.2

F I G. 3

EP 0 236 182 B1

# F I G. 4

# F I G. 5

FIG.6

F I G. 7

# F I G . 8

# F I G. 9

# F I G. IO

EP 0 236 182 B1

# F I G. 11

# F I G. 12

21